# EUROPÄISCHE PATENTSCHRIFT

(11) **EP 3 227 235 B1**
(45) Veröffentlichungstag und Bekanntmachung des Hinweises auf die Patenterteilung: **19.01.2022**
(21) Anmeldenummer: 15832793.2
(22) Anmeldetag: 01.12.2015
(51) Int. Cl.: B03D 1/008, C01D 5/12, C01D 5/16, B03D 1/012

(54) **VERFAHREN ZUR SELEKTIVEN FLOTATION VON KAINIT AUS MINERALGEMISCHEN UNTER VERWENDUNG VON SULFATIERTEN FETTSÄUREN ALS SAMMLERREAGENZ**
PROCESS FOR THE SELECTIVE FLOTATION OF KAINITE FROM MINERAL MIXTURES USING SULFATED FATTY ACIDS AS THE COLLECTOR REAGENT
PROCÉDÉ DE FLOTTATION SÉLECTIVE DE KAÏNITE CONTENUE DANS DES MÉLANGES DE MINÉRAUX AU MOYEN D'ACIDES GRAS SULFATÉS EN TANT QUE RÉACTIF COLLECTEUR

(30) Priorität: 01.12.2014 DE 102014017645
(43) Veröffentlichungstag der Anmeldung: 11.10.2017
(73) Patentinhaber: K+S Aktiengesellschaft, 34131 Kassel (DE)
(72) Erfinder: WACHSMUTH, Uwe, 37242 Bad Soden-Allendorf (DE); BROD, Jochen, 36277 Landershausen (DE)
(74) Vertreter: Reitstötter Kinzebach
(86) Internationale Anmeldenummer: PCT/DE2015/000567
(87) Internationale Veröffentlichungsnummer: WO 2016/086910

(56) Entgegenhaltungen:
- CA-A- 612 295
- DE-B- 1 193 894
- DE-B- 1 203 703
- FR-A- 1 160 073

## Beschreibung

Die vorliegende Erfindung betrifft ein. Verfahren zur selektiven Flotation von Kainit aus Kalirohsalzen oder z.B. aus durch Eindampfverfahren gewonnene Kristallisatsuspensionen, die außer Kainit weitere Minerale wie z.B. Halit, Sylvin und andere Salzminerale enthalten können, unter Verwendung von sulfatierten Fettsäuren oder deren Alkalisalzen als Sammlerreagenz und einem für das Flotationsverfahren bekannten Schäumer (Konditionierungsmittelkombination).

Kalirohsalze, die als Mischsalze erhebliche Anteile an Kainit enthalten, können nach bisherigen Kenntnisstand nur schwer aufbereitet werden. Aktuell gibt es keine großtechnische Aufbereitung zur selektiven Gewinnung von Kainit aus Mineralgemischen mit Hilfe des Flotationsverfahrens. Eine selektive Gewinnung von Kainit würde jedoch die wirtschaftliche Weiterverarbeitung der Kainitfraktion zu Kaliumsulfatprodukten, und damit zu verkaufsfähigen Produkten ermöglichen. Kainit kann aber zum Beispiel auch direkt als Düngemittel oder als Auftaumittel verwendet werden.

In "Aufbereitung fester Rohstoff", Bd. II: Sortierprozesse, Deutscher Verlag für Grundstoffindustrie, Schubert, 1996 wird beschrieben, dass die Flotation des Kainits in Lösungen erfolgt, die dem Existenzbereich des Kainits entsprechen. Hierbei werden n-Alkylammoniumsalze der Kettenlänge C₈ bis C₁₂ als Sammler sowie aliphatische und aromatische Alkohole als Schäumer verwendet. Die Flotation des Kainits im Existenzbereich des Sylvins ist mit denselben Sammlern möglich, wobei der Kainit zusammen mit dem Sylvin aufschwimmt. Die Trennung des Kainits vom Sylvin kann dann in einem zweiten Schritt mit Alkylsulfaten oder Alkansulfonaten sowie Gemischen von verzweigtkettigen primären oder sekundären Ammoniumsalzen unter Zusatz geringer Mengen von n-Alkylammoniumsalzen erfolgen.

In "Potassium Salt Flotation from Great Salt Lake Evaporites", Transactions Society of Mining Engineers, Huiatt, Tippin und Potter, vol. 258, 303 - 310 / 1975 wird beschrieben, dass Kainit mit Dodecylammoniumchlorid und Natriumdodecylsulfonat als Flotationsmittel nicht flotierbar ist.

In "The Flotation chemistry of potassium double salts: Schoenite, Kainite and Camallite", Materials Enginering, Vol. 13, No. 14 - 15, 1483 - 1493 / 2000, beschreiben Hancer et al., dass eine Kainitflotation weder mit Fettsäuren noch mit Alkylammoniumsalzen als Sammler erfolgreich ist.

In DE1122013 wird ein Verfahren zur flotativen Aufbereitung eines carnallit-, kainit- und sylvinhaltigen Kalirohsalzes beschrieben, bei dem ein hoher Carnallitgehalt vorliegt. Die Erfindung war dabei, ein gleichzeitiges Auflösen des Kainits bei der Carnallitzersetzung zu verhindern, indem die Zersetzungslauge vor der Carnallitzersetzung mit dem Flotationsmittel für die Kainitflotation vorkonditioniert wird. Als Flotationsmittel kann beispielsweise Oxystearinsäuresulfonat (Handelsname Praestabitöl) eingesetzt werden. Im Anschluss an die Carnallitzersetzung wird der Rückstand einer Flotation unterworfen, wobei keine selektive Trennung des Kainits von Sylvin erreicht werden konnte.

In "Reagenzsysteme in der Flotation löslicher Salze, Neue Bergbautechnik", Köhler und Kramer , 11 Jg., Heft 6, 362 - 366 / 1981, wird die Aufbereitung eines polymineralischen Rohsalzes (Stebnik, damalige Sowjetunion), bestehend aus Kainit (25 %), Langbeinit (10 %), Halit (35 %), Sylvin, Polyhalit und tonigen Bestandteilen, mit Wasserglas und Polyacrylamid als Tondrücker sowie der Einsatz eines Fettsäuregemisches der Kettenlängen C₇ bis Cg mit bis zu 650 g/t beschrieben. Hierbei werden alle sulfatischen Komponenten gemeinsam in den Schaum ausgetragen. Ferner bestimmen die Autoren im Schaum nur den rechnerischen Anteil an K₂SO₄ und MgSO₄ und geben keine Mineralphasenanalyse der Schaumzusammensetzung an, so dass hier beliebige sulfatische Salze (z.B. Kainit, Langbeinit,) im Schaum vorhanden sein können. Es findet bei diesem Verfahren keine selektive Kainitflotation statt. Eine mineralphasenspezifische Flotation wird nicht beschrieben.

In Hancock, Meacham McLaughlin (1993), S. 105 und in "The Flotation chemistry of potassium double salts: Schoenite, Kainite and Camallite", Materials Enginering, Hancer et al., Vol. 13, No. 14 - 15, 1483 - 1493/2000, wird beschrieben, dass Kainit schwer zu flotieren ist und in andere Salze wie Schönit umgewandelt werden muss, da Schönit besser flotierbar ist. Eine direkte Flotation des Kainits ist hier nicht beschrieben.

Desweiteren erwähnt DE1203703B Kainitflotation mittels Alkylsulfonaten, FR 1160073 A und DE 1193894 B offenbaren Kainitflotation mittels Sulfaten von Fettsäureestern. CA 612295 A erwähnt die Kainitflotation mittels Sulfaten der Fettsäure, jedoch nennt dieses Dokument den hohen Verbrauch an Flotationssammler als Nachteil und offenbart keine detaillierten Prozessparameter.

Der Erfindung liegt die Aufgabe zugrunde, ein für die großtechnische Anwendung einsetzbares Flotationsverfahren bereitzustellen, mittels dessen Kainit selektiv aus Mineralgemischen, z. B. aus Kalirohsalzen, welche neben Kainit auch andere Salzminerale wie z. B. Sylvin oder Halit enthalten, oder erfindungsgemäß aus durch Kristallisation hergestellten Kainit/Sylvin/Halit-Gemischen, abgetrennt werden kann. Insbesondere soll das Verfahren für kainithaltige Mineralgemische wie z. B. Kristallisatgemische aus Zwischenstufen der Kalisalz-Aufbereitung anwendbar sein. Beide bei der Flotation entstehenden Fraktionen sollen, wenn nötig, in nachgeschalteten Verfahren weiter aufbereitet werden können.

Erfindungsgemäß in frisch kristallisierten Kainit-Gemischen ist eine erste Abtrennung mindestens eines anderen Salzminerals (z.B. Sylvin, Halit) nicht erfolgreich. In frisch kristallisierten Gemischen liegt der Kainit sehr fein vor (beispielsweise d₅₀ < 40 µm), während die Minerale Sylvin und Halit gröber (beispielsweise d₅₀ > 40 µm) vorliegen.

Eine Inversflotation des Halits (mittels N-Alkylmorpholin beispielsweise Armoflote 619 der Firma Akzo Nobel) ist nicht erfolgreich, weil der feine Kainit sich ebenfalls in der Schaumfraktion befindet, so dass nur unzureichende Trennungen erreicht werden können.

Eine Flotation mit Fettaminen (beispielsweise Genamin SH100 von Clariant oder Rofamin R von DHW oder ähnliche), bewirkt, dass der Sylvin in der Schaumfraktion ausgebracht wird, wobei diese Fraktion jedoch dann zusätzlich teilweise Kainit enthält. Weder eine selektive Abtrennung des Sylvins noch des Halits von den jeweils sonstigen Gemischbestandteilen ist in diesem Fall möglich.

Die Aufgabe wird durch ein Flotationsverfahren gemäß Anspruch 1 unter Einsatz einer Konditionierungsmittelkombination gelöst, die aus einer sulfatierten Fettsäure oder deren Alkalisalz oder Mischungen aus beiden als Sammlerreagenz und einem für die Flotation bekannten Schäumer (z.B. Glycolether, ein einwertiger aliphatischer Alkohol, Terpenalkohole, Polyglykolether, etc.) gebildet wird (Handelsnamen. Amerfloc MI^{®} von Ashland, Altbezeichnung Praestabitöl).

Die allgemeine Strukturformel des Sammlers ist wie folgt:

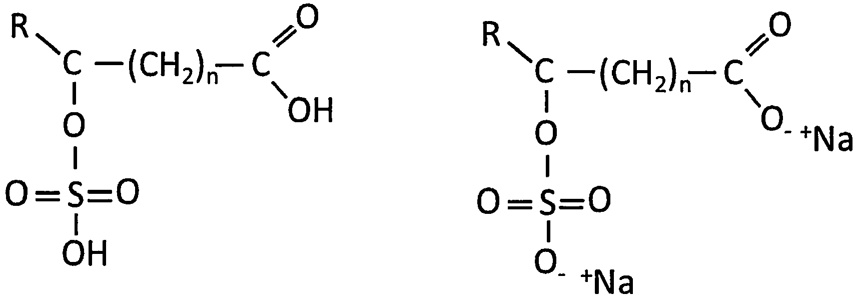

Die vorliegende Carbonsäurefunktion kann teilweise mit der Schwefelsäure verestert sein. Im Allgemeinen sind die sulfatierten Fettsäuren mit unterschiedlichen Sulfatierungsgraden erhältlich (ca. 90% Sulfatierungsgrad bei diesen Versuchen).

Die sulfatierten Fettsäuren können beispielsweise durch die in *"An improved process for treating oils or fats or mixtures of the same or fatty acids for the production of sulphuric acid compounds",* STOCKHAUSEN & CIE CHEM FAB, Patent GB 293717A und in "Verfahren *zur Herstellung hochsulfatierter Fettsäuren und Fettsäure-derivate",* Chemische Fabrik Stockhausen GmbH, Patent DE 3836447 C2 beschriebenen Verfahren hergestellt werden. Hierbei werden ungesättigte Fette oder Fettsäuren mit Schwefelsäure umgesetzt, so dass eine Additionsreaktion stattfindet.

Verschiedene Schäumer sind aus dem Fachgebiet der Flotation bekannt. Es können beipielsweise ein Glycolether, ein einwertiger aliphatischer Alkohol, Terpenalkohole, Polyglykolether, etc. verwendet werden.

Bei Bedarf können weitere Flotationshilfsmittel, dem Fachmann allgemein bekannt als Drücker, beispielsweise Polysaccharide, Stärke, Cellulosen, Guarkernmehl, Tannin und deren Derivate, etc. und Regler (modifizierende Reagenzien) beispielsweise Xanthogenate, Carboxylate, Petroleum, Öle, etc. hinzugesetzt werden.

Die Konditionierung des Kainits geschieht nach bekannter Verfahrensweise in einem, für die Flotation üblichen, sogenannten Anmaischbehälter. In diesem werden die Kalirohsalze mit der Flotationslösung, einer phasentheoretisch passenden gesättigten Salzlösung, zusammen mit der Konditionierungsmittelkombination gemischt. Alternativ wird eine Kristallisatsuspension, erhalten durch Eindampfen, bestehend aus kristallisierten Kainit bzw. anderen Salzmineralen, insbesondere aus frisch kristallisiertem Kainit bzw. anderen Salzmineralen, zusammen mit der Konditionierungsmittelkombination vermischt.

Im Anschluss an das Mischen kann die flotative Aufbereitung durch Rührwerks- und/oder pneumatischer Flotation erfolgen. In Abhängigkeit des Kainit-Gehaltes im Aufgabegut ist hierbei eine einstufige oder mehrstufige Flotation anzuwenden.

Die Minerale in dem zu flotierenden Mineralgemisch müssen zur Durchführung des Verfahrens aufgeschlossen bzw. gering verwachsen vorliegen. Dies kann einerseits durch Aufmahlung des Rohsalzes oder andererseits durch Einsatz eines kristallisierten Salzgemisches (als Kristallisatsuspension), welche durch Eindampfen erhalten wurde, realisiert werden. Auf diese Weise kann das Vorhandensein frischer Oberflächen sichergestellt werden, um eine optimale Adsorption des Sammlers zu ermöglichen.

Die Feststoffgehalte der Flotationssuspension können in Abhängigkeit des gewählten Flotationsverfahrens hierbei 5 bis 40 Gew.-% betragen.

In Korrelation zur spezifischen Oberfläche des Kainits müssen folgende Mengen der Flotationshilfsmittel angewendet werden:
➢ sulfatierte Fettsäuren oder
   deren Alkalisalze: 250 bis 350 g/t_{Feststoff}
➢ Schäumer: bis 75 g/t_{Feststoff}, bevorzugt 25 bis 50 g/t_{Feststoff}

Die Erfindung wird anhand der nachfolgenden Ausführungsbeispiele näher erläutert.

In Beispiel 1 werden Trennversuche im Labormaßstab beschrieben, in Beispiel 2 Trennversuche im Produktionsmaßstab. In den Beispielen wurden als Versuchsbedingungen die Menge des eingesetzten Sammlers, die Menge des Schäumers sowie die Temperatur variiert.

Im Gegensatz zu den im Stand der Technik üblichen Verfahren, den Kainit vor der Flotation in Schönit umzuwandeln, wird hier die Hauptkomponente des Gemisches (Kainit rund 40 - 60 Gew %) direkt über die Schaumfraktion (Konzentrat) ausgebracht, während der Sylvin und Halit in der Rückstandsfraktion/Restmineralfraktion verbleiben.

### Beispiel 1

Das Beispiel 1 zeigt Versuche zur selektiven Kainit-Flotation aus einem Eindampfkristallisat mit der gemäß der Erfindung verwendeten Konditionierungsmittelkombination in der entsprechenden Flotationslösung/Mutterlösung. Als Kainit-Sammler wurde das Natrium-Salz einer sulfatierten Fettsäure sowie ein Glycolether als Schäumer eingesetzt (Handelsnamen: Amerfloc MI^{®} von Ashland). Die Versuche wurden mittels pneumatischer Flotation im Labormaßstab durchgeführt. Das Eindampfkristallisat hatte folgende Zusammensetzung: Halit (28,5 Gew.-%), Kainit (70,5 Gew.-%) und Sylvin (1,0 Gew.-%). Der Feststoffanteil der Kristallisatsuspension betrug ca. 20 Gew.-%. Als Flotationstemperatur wurde 45 °C bzw. 27 °C gewählt. Die Konditionierungszeit betrug 2 min und die Flotationszeit 4 Minuten.

In Tabelle 1 sind die Flotationskennzahlen zusammengestellt.

**Tabelle: 1**

| **Vers.** | **[g/t] Sammler/ Schäumer/ Temp.** | **Konzentrat-Fraktion** | | | | **Rückstands-Fraktion** | | | |
|---|---|---|---|---|---|---|---|---|---|
| | | **Kainit [Gew.-%]** | **Ausbr. Kainit [Gew.-%]** | **K₂O_{ges}.-Gehalt/ K₂O_{ges}.-Ausbr. [Gew.-%]** | **Halit-Gehalt/ Ausbr. [Gew.-%]** | **Kainit [Gew.-%]** | **Ausbr. Kainit [Gew.-%]** | **K₂O_{ges}.-Gehalt/ K₂O_{ges}.-Ausbr. [Gew.-%]** | **Halit-Gehalt/ Ausbr. [Gew.-%]** |
| **1** | **280 / 20 45 °C** | **96,9** | 99 | 18,7/99 | 2,5/7 | **3,0** | **1** | 0,7/1 | 96,9 / 92 |
| **2** | **370 / 30 45 °C** | **96,0** | 99 | 18,5/99 | 3,4/9 | **2,0** | **1** | 0,6/1 | 99,0/91 |
| **3** | **465 / 35 45 °C** | **95,3** | 99 | 18,5/99 | 4,0/9 | **2,0** | **1** | 0,6/1 | 99,2/91 |
| **4** | **280 / 20 27 °C** | **93,7** | 99 | 19,0/95 | 4,3/11 | **2,0** | **1** | 2,4/5 | 95,2 / 89 |
| **5** | **465 / 35 27 °C** | **93,7** | 98 | 18,3/95 | 5,0/13 | **4,6** | **2** | 2,6/5 | 93,0/87 |

Alle Ergebnisse zeigen eine gute Trennung des Kainits (Ausbringen des Kainits 98 bis 99 Gew.-%) und hohe Kainitgehalte im Konzentrat (93,7 bis 96,9 Gew.-%). Die höchste Selektivität (96,9 Gew.-%) bei der Trennung des Kainits wird bei einer Temperatur von 45°C und bei einer Menge des Sammlers von 280 g/t und des Schäumers von 20 g/t erhalten (Versuch 1).

### Beispiel 2

Im Folgenden wurde die Wirksamkeit der Konditionierungsmittelkombination im Produktionsmaßstab für eine kontinuierliche Fahrweise geprüft. Hierbei wurde eine, durch eine Lösungseindampfung gewonnene Kristallisatsuspension, mit den Mineralphasen Halit, Kainit und Sylvin, gemäß der Erfindung in der entsprechenden Flotationslösung/ Mutterlösung flotativ aufbereitet.

Die Kristallisatsuspension mit einem Feststoffanteil von 20 Gew.-% bzw. 17 Gew.-% (Gewichtsprozent), wurde gemäß der Erfindung konditioniert und der pneumatischen Flotationsanlage kontinuierlich zugeführt. Die Flotation erfolgte zweistufig mit in Reihe geschalteten Zellen.

Als Kainit-Sammler wurden das Natrium-Salz einer sulfatierten Fettsäure sowie ein Glycolether als Schäumer eingesetzt (Handelsnamen: Amerfloc MI^{®} von Ashland).

Die eingesetzten Konditionierungsmittelmengen betrugen:
➢ Natrium-Salz einer sulfatierten Fettsäure
   ∘ Versuch 1A bis 1C = 325 g/t_{Festsoff} ; 2A bis 2B = 445 g/t_{Feststoff}
➢ Schäumer
   ∘ Versuch 1A bis 1C = 25 g/t_{Festsoff} ; 2A bis 2B = 34 g/t_{Feststoff}

In Tabelle 2 sind die Flotationskennzahlen der Versuche zusammengestellt.

**Tabelle: 2**

| **Vers.** | **Fraktion** | **Kainit-Gehalt [Gew.-%]** | **Kainit-Ausbringen [Gew.-%]** | **Halit-Gehalt [Gew.-%]** | **Halit-Ausbringen [Gew.-%]** | **Sylvin-Gehalt [Gew.-%]** | **Sylvin-Ausbringen [Gew.-%]** |
|---|---|---|---|---|---|---|---|
| **Phasenverteilung der Aufgabe Vers. 1A (vor der Flotation)** | | **28,3** | | **49,1** | | **22,6** | |
| **1A Ergebnisse (nach der Flotation)** | **Konzentrat** | 93,3 | 83,4 | 1,5 | 0,8 | 5,2 | 5,9 |
| | **Rückstand** | 6,3 | 16,6 | 65,2 | 99,2 | 28,5 | 94,1 |
| **Phasenverteilung der Aufgabe Vers. 1B (vor der Flotation)** | | **26,2** | | **51,7** | | **22,1** | |
| **1B Ergebnisse (nach der Flotation)** | **Konz.** | 94,0 | 76,6 | 1,3 | 0,5 | 4,7 | 4,6 |
| | **Rück.** | 7,8 | 23,4 | 65,4 | 99,5 | 26,8 | 95,4 |
| **Phasenverteilung der Aufgabe Vers. 1C (vor der Flotation)** | | **31,0** | | **47,3** | | **21,7** | |
| **1C Ergebnisse (nach der Flotation)** | **Konz.** | 92,7 | 75,8 | 1,8 | 1,0 | 5,5 | 6,4 |
| | **Rück.** | 10,0 | 24,2 | 62,7 | 99,0 | 27,2 | 93,6 |
| **Phasenverteilung der Aufgabe Vers. 2A (vor der Flotation)** | | **44,3** | | **40,7** | | **15,0** | |
| **2A Ergebnisse (nach der Flotation)** | **Konz.** | 93,6 | 84,2 | 1,8 | 1,7 | 4,7 | 12,4 |
| | **Rück.** | 11,6 | 15,8 | 66,5 | 98,3 | 21,6 | 87,6 |
| **Phasenverteilung der Aufgabe Vers. 2B (vor der Flotation)** | | **44,8** | | **40,2** | | **15,1** | |
| **2B Ergebnisse (nach der Flotation)** | **Konz.** | 95,0 | 88,7 | 1,1 | 1,1 | 3,9 | 10,9 |
| | **Rück.** | 8,7 | 11,3 | 68,3 | 98,9 | 23,1 | 89,1 |

Die Ergebnisse aller Versuche zeigen ein gutes Ausbringen des Kainits (75,8 bis 88,7 Gew.-%) und hohe Kainitgehalte im Konzentrat (92,7 bis 95 Gew.-%). Die bei einer höheren Temperatur (66°C) durchgeführten Versuche 2A bis 2B zeigen die besten Ergebnisse bzgl. des Kainit-Ausbringens (84,2 bis 88,7 Gew.-%).

Die Versuche 1A bis 1C wurden bei einer Temperatur von 25°C durchgeführt, die Versuche 2A bis 2B bei einer Temperatur von 66°C.

Die Zusammensetzung der Flotationslösung wurde so gewählt, dass diese im Existenzbereich des Kainits liegt. Siehe hierzu unter Tabelle 3 Beispiele zur Zusammensetzung der verwendeten Flotationslösungen.

**Tabelle 3 Beispiele zur Zusammensetzung der Flotationslösung (in g/l)**

| **Temp. [°C]** | **MgCl₂** | **MgSO₄** | **KCl** | **NaCl** | **H₂0** |
|---|---|---|---|---|---|
| **25** | 305,0 | 40,1 | 43,5 | 26,7 | 882,7 |
| **25** | 299,7 | 51,3 | 46,0 | 27,2 | 875,7 |
| **45** | 297,9 | 31,4 | 64,2 | 32,9 | 864,7 |
| **45** | 264,1 | 59,3 | 73,1 | 42,8 | 860,0 |
| **66** | 288,6 | 45,0 | 86,5 | 39,7 | 847,3 |
| **66** | 264,8 | 50,1 | 92,6 | 46,3 | 843,3 |

Die Kainitfraktion kann z.B. zur Kaliumsulfatproduktion verwendet werden, während die Halit/Sylvinfraktion einer weiteren Sylvinflotation oder dem Heißlöseverfahren zugeführt werden kann.

## Patentansprüche

1. Verfahren zur Aufbereitung von Kainit enthaltenden, kristallisierten Salzgemischen, bei denen es sich um durch Kristallisation frisch hergestellter Kainit/Sylvin/Halit-Salzgemische handelt, zur Herstellung einer Kainit-Konzentratfraktion und einer Rückstandsfraktion bestehend aus den Restmineralen, die im Feststoffgemenge vorhanden sind, mittels eines ein- oder mehrstufigen flotativen Trennverfahrens, **dadurch gekennzeichnet, dass**
das kristallisierte Salzgemisch mit einer Konditionierungsmittelkombination bestehend aus einer sulfatierten Fettsäure oder deren Alkalisalz als Sammlerreagenz und einem für die Flotation bekannten Schäumer in einer Flotationslösung intensiv vermischt wird und anschließend durch Rührwerks- oder pneumatische Flotation in eine Kainitkonzentratfraktion und eine Rückstandsfraktion getrennt wird, wobei
250 bis 350 g/t_{Feststoff}, der sulfatierten Fettsäure oder deren Alkalisalze als Sammler eingesetzt werden und die Flotationstemperatur 25°C bis 80°C beträgt.

2. Verfahren nach Anspruch 1, **dadurch gekennzeichnet, dass** durch Eindampfverfahren gewonnene frisch kristallisierte Salzgemische bestehend aus Kainit, Sylvin und Halit als Ausgangsmaterial eingesetzt werden.

3. Verfahren nach einem der vorherigen Ansprüche, **dadurch gekennzeichnet, dass** die entstandenen Fraktionen in nachgeschalteten Prozessen weiter aufbereitet werden.

4. Verfahren nach einem der vorherigen Ansprüche, **dadurch gekennzeichnet, dass** höchstens 75 g/t_{Feststoff}, des Schäumers eingesetzt werden.

5. Verfahren nach einem der vorherigen Ansprüche, **dadurch gekennzeichnet, dass** 25 bis 50 g/t_{Feststoff}, des Schäumers eingesetzt werden.

6. Verfahren nach einem der vorherigen Ansprüche, **dadurch gekennzeichnet, dass** die Flotationstemperatur 45 bis 70 °C beträgt.

## Claims

1. A process for the processing of crystallized salt mixtures containing kainite, which are kainite/sylvin/halite salt mixtures freshly prepared by crystallization, for the preparation of a kainite concentrate fraction and a residue fraction consisting of the residual minerals present in the solid mixture, by means of a one- or multi-stage flotative separation process, **characterized in that**
the crystallized salt mixture is intensively mixed with a conditioning agent combination consisting of a sulfated fatty acid or its alkali salt as collector reagent and a foaming agent known for flotation in a flotation solution and then separated by mechanical or pneumatic flotation into a kainite concentrate fraction and a residue fraction, wherein
250 to 350 g/t _{solids} of the sulfated fatty acid or alkali salts thereof are used as collectors, and the flotation temperature is 25°C to 80°C.

2. The process according to claim 1, **characterized in that** freshly crystallized salt mixtures consisting of kainite, sylvin and halite obtained by evaporation processes are used as starting material.

3. The process according to any of the preceding claims, **characterized in that** the resulting fractions are further processed in downstream processes.

4. The process according to any one of the preceding claims, **characterized in that** at most 75 g g/t _{solids} of the foaming agent are used.

5. The process according to any one of the preceding claims, **characterized in that** 25 to 50 g g/t _{solids} of the foaming agent are used.

6. The process according to any one of the preceding claims, **characterized in that** the flotation temperature is 45 to 70 °C.

## Revendications

1. Procédé de traitement de mélanges de sels cristallisés contenant de la kaïnite, qui sont des mélanges de sels de kaïnite/sylvin/halite fraîchement préparés par cristallisation, pour la préparation d'une fraction concentrée de kaïnite et d'une fraction résiduelle constituée des minéraux résiduels présents dans le mélange solide, au moyen d'un procédé de séparation par flottation à une ou plusieurs étapes, **caractérisé en ce que**
le mélange de sels cristallisés est mélangé intensivement dans une solution de flottation avec une combinaison d'agents de conditionnement constituée d'un acide gras sulfaté ou de son sel de métal alcalin comme réactif collecteur et d'un agent moussant connu pour la flottation et est ensuite séparé par flottation par agitateur ou pneumatique en une fraction de concentré de kainite et une fraction de résidu, dans lequel
250 à 350 g/t _{solide} d'acide gras sulfaté ou de ses sels alcalins sont utilisés comme collecteurs et la température de flottation est de 25°C à 80°C.

2. Procédé selon la revendication 1, **caractérisé en ce que** l'on utilise comme matière première des mélanges de sels fraîchement cristallisés constitués de kainite, de sylvin et d'halite obtenus par des procédés d'évaporation.

3. Procédé selon l'une quelconque des revendications précédentes, **caractérisé en ce que** les fractions résultantes sont encore traitées dans des procédés en aval.

4. Procédé selon l'une quelconque des revendications précédentes, **caractérisé en ce qu'**on n'utilise un maximum de 75 g/t _{solide} de l'agent moussant.

5. Procédé selon l'une quelconque des revendications précédentes, **caractérisé en ce qu'**on utilise 25 à 50 g/t _{solide} de l'agent moussant.

6. Procédé selon l'une quelconque des revendications précédentes, **caractérisé en ce que** la température de flottation est de 45 à 70 °C.
